(19) Europäisches Patentamt

European Patent Office

Office européen des brevets

(11) **EP 1 278 082 A1**

(12) **EUROPEAN PATENT APPLICATION**

(43) Date of publication:
**22.01.2003 Bulletin 2003/04**

(51) Int Cl.[7]: **G02B 6/34**, H04B 10/18

(21) Application number: **01440223.4**

(22) Date of filing: **17.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventors:
• **Riant, Isabelle**
  **91400 Orsay (FR)**
• **Verdrager, Véronique**
  **91190 Gif-sur-Yvette (FR)**

(74) Representative: **Rausch, Gabriele, Dr. et al**
**Alcatel**
**Intellectual Property Department, Stuttgart**
**70430 Stuttgart (DE)**

(54) **A chromatic dispersion compensator**

(57) The present invention relates to a chromatic dispersion compensator (10) comprising a Bragg grating (1) with quadratically varying pitch, said Bragg grating having a group time response with a quadratic component $Q_1$ and a linear component $L_1$, and the compensator further comprising a Bragg grating (2) with linearly varying pitch, said Bragg grating with linearly varying pitch having a group time response with a linear component $L_2$, and said linear components $L_1$ and $L_2$ being opposite in sign.

FIG_1

**Description**

The invention relates to optical telecommunications, and more particularly to wavelength division multiplexed (WDM) high data rate optical fiber transmission systems.

In conventional manner, on each transmission channel of a WDM system, short and close-together light pulses taken from a carrier wave form polychromatic modulated waves which propagate along line optical fibers. The propagation of short-duration pulses over long distances is disturbed by the chromatic dispersion of group velocities. Chromatic dispersion is given by variation in a propagation time known as the "group time" as a function of wavelength :

$$D(\lambda) = \frac{d\tau(\lambda)}{d\lambda}$$

Group time can be developed as a Taylor series around a wavelength $\lambda_0$:

$$\tau(\lambda) = \tau(\lambda_0) + \frac{d\tau(\lambda)}{d\lambda}\bigg|_{\lambda=\lambda_0}(\lambda - \lambda_0) + \frac{d^2\tau(\lambda)}{d\lambda^2}\bigg|_{\lambda=\lambda_0}(\lambda - \lambda_0)^2 + \dots$$

Consequently, different orders of chromatic dispersion appear in the following development:

$$D(\lambda) = \frac{d\tau(\lambda)}{d\lambda}\bigg|_{\lambda=\lambda_0} + \frac{d^2\tau(\lambda)}{d\lambda^2}\bigg|_{\lambda=\lambda_0}(\lambda - \lambda_0) + \dots$$

in which:

$$\frac{d\tau(\lambda)}{d\lambda}\bigg|_{\lambda=\lambda_0}$$

represents the second order of chromatic dispersion and is commonly referred to as "chromatic dispersion"; and

$$\frac{d^2\tau(\lambda)}{d\lambda^2}\bigg|_{\lambda=\lambda_0}$$

represents the third order of chromatic dispersion and is commonly referred to as "chromatic dispersion slope".

These second and third orders of chromatic dispersion appear in the form of progressive deformation of the pulse as it propagates. This deformation runs the risk of causing errors on detection. It results from the fact that, for example around 1550 nanometers (nm), the "high frequency" components of the spectrum of a pulse propagate faster than its "low frequency" components, thus redistributing spectral components during propagation. These phenomena occur in particular with very high data rate systems. Since each pulse is very short, it is particularly polychromatic. The wavelength spectrum in the "working" range comprises a central wavelength $\lambda_c$ of a carrier wave surrounded by two working bands of width $\Delta\lambda$ that is generally about 0.1 nm to 1 nm.

In the prior art, proposals are made to compensate chromatic dispersion slope and chromatic dispersion by introducing appropriate delays for each of the wavelengths lying in the working range. For this purpose, a Bragg grating with quadratically varying pitch is used that has a Bragg wavelength $\lambda_B$ that is as close as possible to $\lambda_c$ and that has a Bragg bandwidth $2\Delta\lambda_B$ that is greater than $2\Delta\lambda$.

The group time response of that type of grating as a function of wavelength contains a quadratic component in picoseconds per nanometer per nanometer (ps/nm²) for correcting the dispersion slope and a linear component in picoseconds per nanometer (ps/nm) for correcting chromatic dispersion. Such a system is not satisfactory since any attempt at correcting dispersion slope is automatically accompanied with a modification of the dispersion. Thus, by tuning the quadratic component to correct the slope, the linear component is modified simultaneously so that dispersion correction is no longer optimized.

An object of the present invention is to implement apparatus enabling chromatic dispersion and chromatic dispersion slope to be compensated independently, and optionally enabling chromatic dispersion slope to be compensated on its own.

To this end, the invention provides a chromatic dispersion compensator comprising a Bragg grating with quadratically varying pitch having a Bragg wavelength $\lambda_{B1}$ and a Bragg bandwidth $2\Delta\lambda_{B1}$ giving a first operating range covering at least a first fraction of a working range having a center wavelength $\lambda_c$ and a working bandwidth $2\Delta\lambda$, said Bragg grating having a group time response with a quadratic component $Q_1$ and a linear component $L_1$, the compensator being characterized in that it further comprises a Bragg grating with linearly varying pitch of Bragg wavelength $\lambda_{B2}$ and Bragg bandwidth $2\Delta\lambda_{B2}$ giving a second operating range overlapping at least a second fraction of said working range, said first and second fractions having at least a portion in common, said Bragg grating with linearly varying pitch having a group time response with a linear component $L_2$, and in that said linear components $L_1$ and $L_2$ are of opposite sign, at least in said portion in common.

By tuning the quadratic component $Q_1$ to correct the slope, the linear component $L_1$ is modified as in the prior art. However, this modification can be counterbalanced by adjusting the linear component $L_2$ of the Bragg grating with linearly varying pitch. Thus, in the portion in common, dispersion correction can also be optimized by the compensator of the invention.

In this way, the compensator of the invention makes it possible to correct chromatic dispersion and chromatic dispersion slope independently.

By way of example, the working range could be centered about a wavelength in the 1530 nm to 1560 nm wavelength transmission band C. Bragg gratings are thus selected whose operating ranges are adapted to the working range.

In a preferred embodiment, the linear components $L_1$ and $L_2$ are identical in absolute value, at least in said portion in common.

In this manner, in the portion in common, the group time response that results from combining the two Bragg gratings of the invention comprises the quadratic component $Q_1$ only, thereby making it possible to correct the chromatic dispersion slope on its own.

In this embodiment, the compensator of the invention can be associated with a specific dispersion compensating fiber (DCF) that corrects dispersion.

Advantageously, the portion in common can be equal to the first and second fractions so as to correct chromatic dispersion for more wavelengths in the working range.

Preferably, the first and second fractions can be of widths equal to the width of the working band.

Under such circumstances, the performance of the compensator of the invention is optimized since the compensator corrects all of the wavelengths of the working range.

In an embodiment of the invention, the wavelengths $\lambda_{B1}$ and $\lambda_{B2}$ are identical so as to make it easier to set the compensator of the invention on the center wavelength of the working range.

The Bragg gratings are optical gratings operating in reflection.

Also, advantageously, the compensator of the invention can include a four-port optical circulator connected to the Bragg gratings.

Such a circulator makes it possible to connect a pulse-carrying inlet fiber successively to each of the Bragg gratings of the invention and then to an outlet fiber.

Chromatic dispersion can vary over time because of changes in transmission. The causes of such changes can be constituted, for example, by variation in external conditions, particularly temperature, by variation in light power which gives rise to additional non-linear effects, by irregularities in the active components of the transmission system that includes the compensator, and/or by the system being reconfigured.

In a preferred embodiment, the compensator of the invention includes a piezoelectric type actuator and the Bragg gratings with quadratically and linearly varying pitch are fixed on the actuator so as to enable it to modify the varying pitch of each Bragg grating along its own axis under the effect of axial strain.

In general, a piezoelectric type actuator comprises either a single one-piece piezoelectric segment, or else a stack of piezoelectric segments all electrically insulated from one another. Each piezoelectric segment is individually connected to a pair of electrodes. On being subjected to an electrical voltage via its pair of electrodes, a segment lengthens.

Since the Bragg gratings of the invention are fixed on a piezoelectric type actuator, deformation of a segment gives rise to deformation of all of the Bragg grating pitches if the segment is the only segment, or else to deformation of all of the pitches in that part of each Bragg grating that corresponds to the segment in question when a plurality of segments are stacked.

With an actuator of the invention having a single one-piece segment, a single voltage is applied along the actuator. In this manner, the group time response of the compensator is shifted in wavelength.

With a multi-segment actuator of the invention, it is possible, for example, to apply voltages that increase linearly with segment position along the actuator. In this manner, the group time response of the compensator of the invention is enlarged. Consequently, the initial portion in common of the group time response is of modified quadratic shape.

More broadly, by applying a voltage or a voltage profile that varies over time, it is possible with the compensator of the invention to adapt the group time response as a function of the correction that needs to be performed at any given instant. In this sense, the compensator of the invention can be said to provide "dynamic" compensation of chromatic dispersion.

In another advantageous embodiment, the compensator of the invention comprises:

- a first piezoelectric type actuator, said Bragg grating with quadratically varying pitch being fixed on said first actuator;
- a second piezoelectric type actuator, said Bragg grating with linearly varying pitch being fixed on said second actuator;
  said first and second actuators modifying the varying pitches of said Bragg gratings along their respective axes under the effect of axial strain.

In this configuration, the two Bragg gratings can be subjected to different deformation, each segment of one of the actuators being associated with the pitch of part of one of the gratings or with all of the pitches of one of the gratings. This gives additional options for dynamically correcting dispersion.

For example, the compensator of the invention can correct chromatic dispersion slope alone while the actuators are not in operation, and subsequently it can correct independently both chromatic dispersion slope and chromatic dispersion when the actuators are in operation.

The characteristics and objects of the present invention appear in greater detail from the following description with reference to the accompanying figures which are present by way of non-limiting illustration.

In the figures:

- Figure 1 is a diagram of a first embodiment of a chromatic dispersion compensator of the invention;
- Figure 2 shows the initial group time responses of the Bragg gratings of the Figure 1 chromatic dispersion compensator;
- Figure 3 shows the initial group time response of the chromatic dispersion compensator of Figure 1;
- Figure 4 shows the initial and the second group time responses of the chromatic dispersion compensator of Figure 1;
- Figure 5 shows third and the fourth group time responses of the chromatic dispersion compensator of Figure 1;
- Figure 6 is a diagram of a second embodiment of a chromatic dispersion compensator of the invention;
- Figure 7 shows the initial and the second group time responses of the Figure 6 chromatic dispersion compensator;
- Figure 8 is a diagram of a third embodiment of a chromatic dispersion compensator; and
- Figure 9 shows the initial and second group time responses of the Figure 8 chromatic dispersion compensator.

In all of the figures, elements in common, i.e. that perform the same function, are designated by the same references.

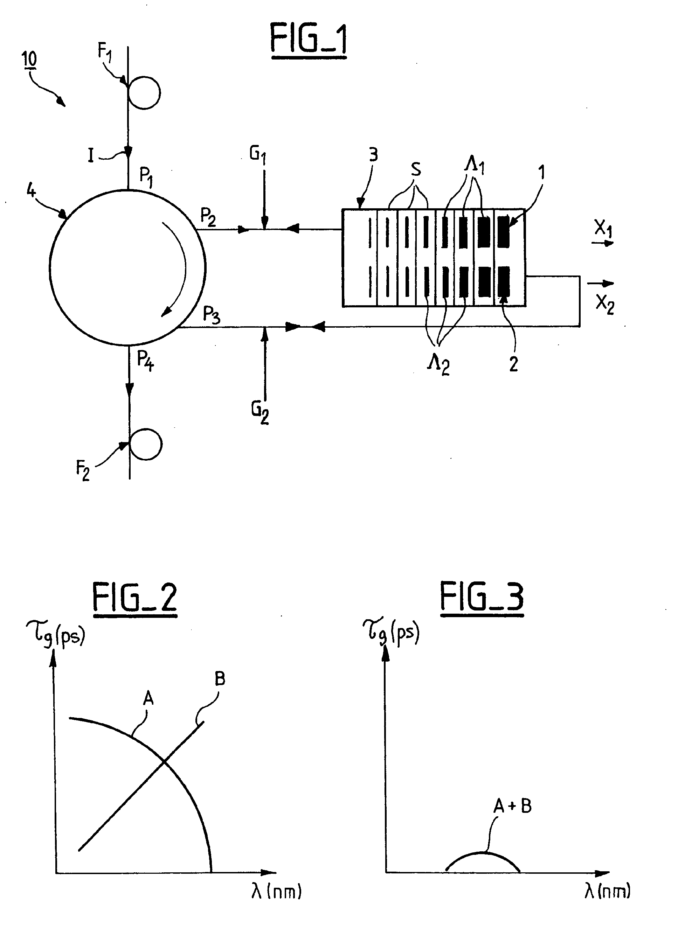

Figure 1 is a diagram of a first embodiment of a chromatic dispersion compensator 10 of the invention. The compensator 10 is for correcting the chromatic dispersion slope of polychromatic pulses I whose working range wavelength spectrum is centered about a center wavelength $\lambda_c$ equal to about 1550 nm, for example, and having a working bandwidth $2\Delta\lambda$ equal to about 0.8 nm, for example.

The compensator 10 comprises:

- a Bragg grating 1 of quadratically varying pitch $\Lambda_1$, on an axis $X_1$, with an initial Bragg wavelength $\lambda_{B1}$ equal to 1550 nm and an initial Bragg bandwidth $2\Delta\lambda_{B1}$ equal to about 0.8 nm, giving an initial operating range of 1549.6 nm to 1550.4 nm, equal to the working range, the Bragg grating having a group time response with both a quadratic component $Q_1$ and a linear component $L_1$; and
- a Bragg grating 2 of linearly varying pitch $\Lambda_2$, on an axis $X_2$, with an initial Bragg wavelength $\lambda_{B2}$ equal to 1550 nm and an initial Bragg bandwidth $2\Delta\lambda_{B2}$ equal to about 0.8 nm, giving an initial operating range of 1549.6 nm to 1550.4 nm equal to the working range, said Bragg grating having a group time response with a linear component $L_2$.

The pitches $\Lambda_1$ and $\Lambda_2$ shown in fine lines correspond to longer wavelengths. The pitches $\Lambda_1$ and $\Lambda_2$ shown in thick lines correspond to shorter wavelengths.

The Bragg gratings 1, 2 with quadratically and linearly varying pitches initially present linear components $L_1$ and $L_2$ that are identical in absolute value and opposite in sign in the working range.

In addition, the compensator 10 includes a piezoelectric actuator 3 made up of a plurality of piezoelectric segments s that are insulated from one another and individually connected to respective pairs of electrodes (not shown). This makes it possible separately to control the voltage applied to each segment s.

By way of example, the Bragg gratings 1, 2 are fixed on the actuator 3 by means of adhesive. More precisely, the parts (not shown) of pitches $\Lambda_1$ and $\Lambda_2$ of the Bragg gratings 1, 2 are fixed in pairs on a given segment s. A part of a grating can also have a plurality of pitches.

In addition, the compensator 10 has a four-port optical circulator 4 associated with two light guides $G_1$ and $G_2$ connecting an inlet optical fiber $F_1$ in succession to each of the Bragg gratings 1 and 2 and then to an outlet optical fiber $F_2$.

The path of a pulse I through the compensator 10 is described below.

A pulse I to be corrected that is being conveyed by the inlet optical fiber $F_1$ enters the optical circulator 4 via its first port $P_1$, which circulator outputs the pulse I via a second port $P_2$. The pulse I carried by the light guide $G_1$ is taken to the Bragg grating 1 with quadratically varying pitch. The pulse is input to the grating 1 at its long wavelength end. The pulse I is reflected and returns towards the second port $P_2$. The pulse I then continues round the circulator 4 and is output through a third port $P_3$ leading via the light guide $G_2$ to the Bragg grating 2 of linearly varying pitch. The pulse I enters the grating 2 via its short wavelength end so as to have a linear component $L_2$ of sign opposite to $L_1$. After reflection, the pulse I returns back into the circulator 4 via the third port $P_3$ and leaves the compensator 10 via the fourth port $P_4$ which is connected to the outlet optical fiber $F_2$. This serves to reshape the pulse I.

The compensator 10 would clearly operate equally well if the order of the gratings was interchanged (the pulse propagating firstly through the grating with linearly varying pitch and subsequently through the grating with quadratically varying pitch). Similarly, the directions of the two gratings can likewise be reversed relative to the configuration shown.

Figure 2 shows two curves A and B representing diagrammatically the initial responses, i.e. the responses when no voltage is applied to the piezoelectric actuator 3. The responses are shown in terms of group time as a function of wavelength for each of the Bragg gratings 1, 2 in the compensator 10. A corresponds to the Bragg grating 1 and B corresponds to the Bragg grating 2.

The group time response of curve A has a linear component $L_1$ of -562 ps/nm for correcting chromatic dispersion and a quadratic component $Q_1$ of -56 ps/nm$^2$ for correcting chromatic dispersion slope.

The group time response of curve B possesses a linear component $L_2$ of 562 ps/nm for correcting chromatic dispersion.

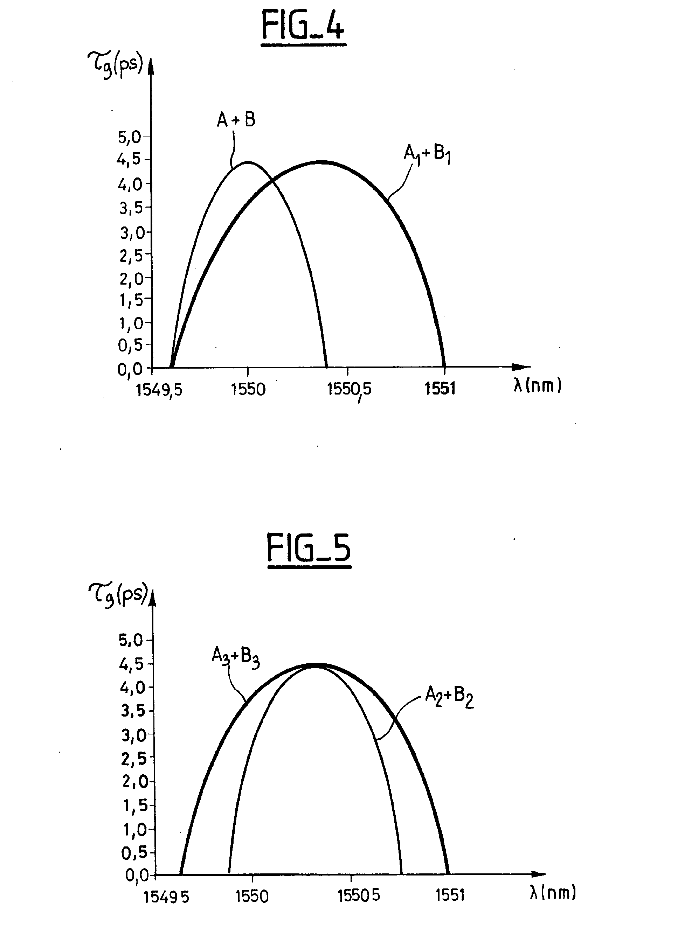

Figure 3 shows a curve A+B representing the initial response - i.e. when no voltage is applied to the piezoelectric actuator 3 - giving group time as a function of wavelength for the compensator 10 as results from combining the Bragg gratings 1 and 2.

The group time response of the curve A+B possesses solely a quadratic component $Q_1$ of -56 ps/nm$^2$ for correcting chromatic dispersion slope.

By applying a positive voltage to each segment s of the actuator 3, each segment s is subjected to deformation which is communicated to the varying pitches $\Lambda_1$, $\Lambda_2$ of the two Bragg gratings 1, 2 in the form of axial strain along their respective axes $X_1$, $X_2$.

Figure 4 shows the curve A+B of Figure 3 and a curve $A_1+B_1$ (heavy line) presenting a second group time response as a function of wavelength for the compensator 10 when subjected to a voltage that varies linearly along the actuator 3 between 0 V and 250 V, the segments that deform the most being those associated with the longer wavelength pitches.

The second group time response of the curve $A_1+B_1$ remains of the quadratic type. The quadratic component $Q_1$ becomes -18 ps/nm$^2$ for correcting chromatic dispersion slope. The response is centered on 1550.3 nm instead of 1550 nm, since the initial Bragg wavelengths $\lambda_{B1}$, $\lambda_{B2}$ are modified under the effect of the axial strain. In addition, the compensator 10 operates over a wavelength range extending from 1549.6 nm to 1551 nm which is wider than the working range since the initial operating ranges of both Bragg gratings 1, 2 have been enlarged. In the working range between 1549.6 nm and 1550.3 nm, the curve $A_1+B_1$ is no longer symmetrical about the center wavelength equal to 1550 nm.

By a suitable choice of voltages applied over time to the various piezoelectric segments s, it is possible in dynamic mode to retain a symmetrical operating range.

Thus, Figure 5 shows a curve $A_2+B_2$ and a curve $A_3+B_3$ (thick bold line) presenting third and fourth group time responses respectively as a function of wavelength for the compensator 10.

The third group time response of curve $A_2+B_2$ is obtained by applying a voltage of 125 V to each of the segments s. This response is centered on 1550.3 nm instead of 1550 nm. This is merely an offset, shifting the initial operating ranges.

The fourth group time response of curve $A_3+B_3$ is obtained by subsequently applying a voltage that varies linearly along the actuator 3 over the range 0 V to 250 V while maintaining an applied voltage of 125 V on the middle segment of wavelength equal to 1550.3 nm. The response thus remains centered on 1550.3 nm when operating in dynamic mode, with a modified Bragg bandwidth $2\Delta\lambda_{B1}$, $2\Delta\lambda_{B2}$ which has become equal to 1.4 nm, thus making it possible in particular to cover the working range and other working ranges of the transmission band C.

From the examples shown in Figures 3, 4, and 5, it can be seen that it is possible to tune the chromatic dispersion slope correction of the compensator 10 dynamically by applying appropriate voltages to each of the segments s.

In addition, the initially-selected Bragg wavelengths of $\lambda_{B1}$, $\lambda_{B2}$ are given merely as an indication. By way of example, it is possible to provide gratings having values for $\lambda_{B1}$ and $\lambda_{B2}$ that are equal to 1449.7 nm when 0 V is applied so as to remain centered in dynamic mode on a working range around 1550 nm when a voltage is applied that varies linearly along the actuator 3 from 0 V to 250 V and while maintaining an applied voltage of 125 V on the middle segment.

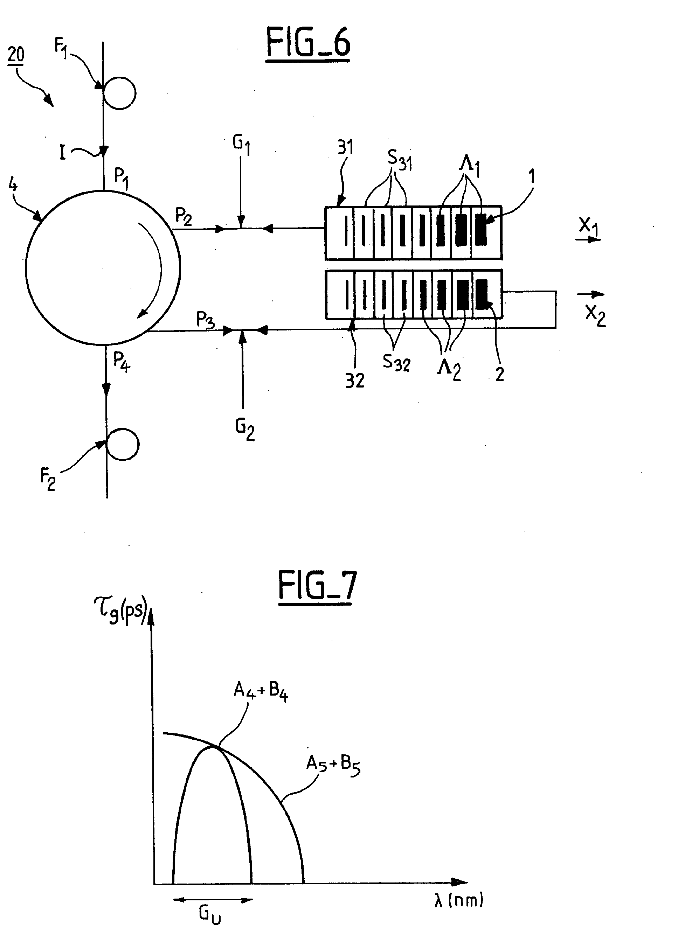

Figure 6 is a diagram of a second embodiment of a chromatic dispersion compensator 20 of the invention. The compensator 20 is for rectifying the chromatic dispersion slope and dispersion of polychromatic pulses I having a wavelength spectrum occupying the working range.

The compensator 20 has Bragg gratings 1, 2 respectively with quadratically varying pitch $\Lambda_1$ and with linearly varying pitch $\Lambda_2$, a four-port optical circulator 4, and two light guides $G_1$ and $G_2$, with inlet and outlet optical fibers $F_1$ and $F_2$ as described for the first embodiment.

The Bragg gratings 1 and 2 with quadratically and linearly varying pitch initially have linear components $L_1$ and $L_2$ in the working range $G_u$ that are identical in absolute value and opposite in sign.

In addition, the compensator 20 has two piezoelectric actuators 31 and 32 each comprising multiple piezoelectric segments.

The Bragg grating 1 is fixed to the actuator 31 along the axis $X_1$, e.g. by adhesive. The Bragg grating 2 is fixed on the actuator 32 along the axis $X_2$, e.g. by adhesive.

The path followed by a pulse I through the compensator 20 is similar to the path described for the first embodiment.

Figure 7 shows a curve $A_4+B_4$ and a curve $A_5+B_5$ respectively showing the initial and a second group time response as a function of wavelength for the compensator 20.

In order to correct chromatic dispersion slope in the working range $G_u$, the group time response of curve $A_4+B_4$ has a quadratic component $Q_1$ only.

The second group time response represented by curve $A_5+B_5$ is obtained by applying a voltage that varies linearly from 0 V to 250 V along each actuator 31 and 32, with the segments $s_{31}$ and $s_{32}$ that deform the most being associated with the longer wavelength pitches. The linear variations selected for the two actuators are different, such that the segments $s_{31}$ and $s_{32}$ situated at the same X position are not subjected to identical voltages. This makes it possible for the second group time response to comprise both a quadratic component $Q_1$ and a non-zero linear component $L_3$ for correcting chromatic dispersion. In addition, the compensator 20 operates beyond the working range $G_u$.

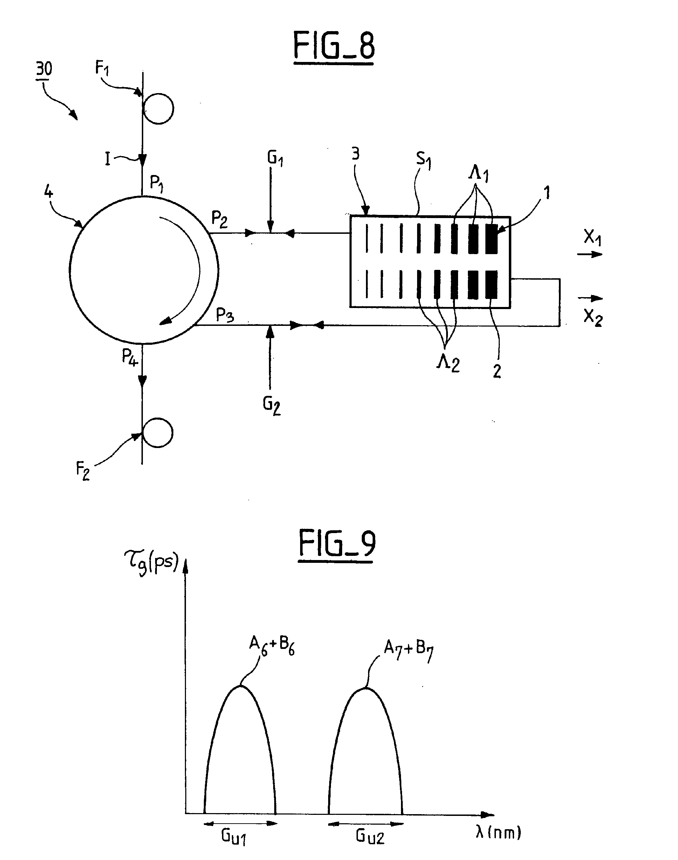

Figure 8 is a diagram of a third embodiment of a chromatic dispersion compensator 30 of the invention. The compensator 30 is designed to correct the chromatic dispersion slope of polychromatic pulses I in one or more given working ranges.

The compensator 30 comprises a Bragg grating 1 with quadratically varying pitch $\Lambda_1$ and a Bragg grating 2 with linearly varying pitch $\Lambda_2$, a four-port optical circulator 4, two light guides $G_1$ and $G_2$, and inlet and outlet optical fibers $F_1$ and $F_2$ as described for the first embodiment.

The Bragg gratings 1 and 2 of quadratically and of linearly varying pitch initially have linear components $L_1$ and $L_2$ in a working range $G_{u1}$ that are identical in absolute value and opposite in sign.

In addition, the compensator 30 has a piezoelectric actuator 3 comprising a single one-piece piezoelectric segment $s_1$. The Bragg gratings 1, 2 are fixed to the actuator 3 along axes $X_1$ and $X_2$, e.g. by adhesive.

The path followed by a pulse I through the compensator 30 is similar to the path described for the first embodiment.

Figure 9 shows a curve $A_6+B_6$ and a curve $A_7+B_7$ respectively representing the initial response and a second response for group time as a function of wavelength in the compensator 30.

The initial group time response of curve $A_6+B_6$ has a single quadratic component $Q_1$ in the working range $G_{U1}$ for correcting chromatic dispersion slope.

The second group time response represented by curve $A_7+B_7$ is obtained by applying a positive voltage of about 100 V so as to offset the initial response into the working range $G_{u2}$. Thus, the compensator 30 is adjustable in wavelength so as to go from one working range to another, e.g. within a transmission band such as band C.

Naturally, the above description is given purely by way of illustration. Any means can be replaced by equivalent means without going beyond the ambit of the invention.

The four-port optical circulator described above could be replaced by two three-port optical circulators likewise connected to the two Bragg gratings of the invention.

Another way of modifying pitch variation in the Bragg gratings of the invention consists, for example, in using heater resistors to change the temperature of the gratings, or else in using magnetic fields.

**Claims**

1. A chromatic dispersion compensator (10, 20, 30) comprising a Bragg grating (1) with quadratically varying pitch having a Bragg wavelength $?_{B1}$ and a Bragg bandwidth $2\Delta\lambda_{B1}$ giving a first operating range covering at least a first fraction of a working range having a center wavelength $\lambda_c$ and a working bandwidth $2\Delta\lambda$, said Bragg grating having a group time response with a quadratic component $Q_1$ and a linear component $L_1$, the compensator being **characterized in that** it further comprises a Bragg grating (2) with linearly varying pitch of Bragg wavelength $\lambda_{B2}$ and Bragg bandwidth $2\Delta\lambda_{B2}$ giving a second operating range overlapping at least a second fraction of said working range, said first and second fractions having at least a portion in common, said Bragg grating with linearly varying pitch having a group time response with a linear component $L_2$, and **in that** said linear components $L_1$ and $L_2$ are of opposite sign, at least in said portion in common.

2. A chromatic dispersion compensator (10, 30) according to claim 1, **characterized in that** said linear components $L_1$ and $L_2$ are identical in absolute value, at least in said portion in common.

3. A chromatic dispersion compensator (10, 20, 30) according to claim 1 or claim 2, **characterized in that** said portion in common is equal to said first and second fractions.

4. A chromatic dispersion compensator (10, 20, 30) according to any one of claims 1 to 3, **characterized in that** first and second fractions are of width equal to said working bandwidth $2\Delta\lambda$.

5. A chromatic dispersion compensator according to any one of claims 1 to 4, **characterized in that** said wavelengths $\lambda_{B1}$ and $\lambda_{B2}$ are identical.

6. A chromatic dispersion compensator (10, 20, 30) according to any one of claims 1 to 5, **characterized in that** it includes a four-port optical circulator (4) connected to said Bragg gratings (1, 2).

7. A chromatic dispersion compensator (10, 30) according to any one of claims 1 to 6, **characterized in that** it includes a piezoelectric type actuator (3), and **in that** said Bragg gratings (1, 2) with quadratically and linearly varying pitches are fixed to said actuator, said actuator modifying the varying pitches of said Bragg gratings along their respective axes $(X_1, X_2)$ under the effect of axial strain.

8. A chromatic dispersion compensator (20) according to any one of claims 1 to 6, **characterized in that** it includes:

   - a first piezoelectric type actuator (31), said Bragg grating (1) with quadratically varying pitch being fixed on said first actuator;
   - a second piezoelectric type actuator (32), said Bragg grating (2) with linearly varying pitch being fixed on said second actuator;
   
   said first and second actuators modifying the varying pitches of said Bragg gratings along their respective axes $(X_1, X_2)$ under the effect of axial strain.

# FIG_1

# FIG_2

# FIG_3

# FIG_4

# FIG_5

## FIG_6

## FIG_7

## FIG_8

## FIG_9

European Patent
Office

**EUROPEAN SEARCH REPORT**

Application Number

EP 01 44 0223

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/007605 A1 (TAKAMATSU HISASHI ET AL) 12 July 2001 (2001-07-12)<br>* paragraph '0062! *<br>* paragraph '0115!; figures 1,9 * | 1,3-5 | G02B6/34<br>H04B10/18 |
| Y |  | 2,6-8 |  |
| Y | EP 1 081 881 A (NORTEL NETWORKS LTD) 7 March 2001 (2001-03-07)<br>* figures 1,5 *<br>* paragraph '0038! * | 6-8 |  |
| A |  | 1 |  |
| Y | WILLIAMS J A R ET AL: "The design of in-fiber Bragg grating systems for cubic and quadratic dispersion compensation" OPTICS COMMUNICATIONS, NORTH-HOLLAND PUBLISHING CO. AMSTERDAM, NL, vol. 116, no. 1, 15 April 1995 (1995-04-15), pages 62-66, XP004013254 ISSN: 0030-4018<br>* page 65, column 1 * | 2 |  |
| A |  | 1 | TECHNICAL FIELDS SEARCHED (Int.Cl.7)<br>G02B<br>H04B |
| Y | OHN M M ET AL: "Dispersion variable fibre Bragg grating using a piezoelectric stack" ELECTRONICS LETTERS, IEE STEVENAGE, GB, vol. 32, no. 21, 10 October 1996 (1996-10-10), pages 2000-2001, XP006005830 ISSN: 0013-5194<br>* the whole document * | 7,8 |  |

The present search report has been drawn up for all claims

| Place of search | Date of completion of the search | Examiner |
|---|---|---|
| MUNICH | 15 November 2001 | Lord, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 01 44 0223

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2001

| Patent document cited in search report | Publication date | Patent family member(s) | | Publication date |
|---|---|---|---|---|
| US 2001007605 A1 | 12-07-2001 | JP | 2001197003 A | 19-07-2001 |
| | | EP | 1117200 A2 | 18-07-2001 |
| EP 1081881 A | 07-03-2001 | EP | 1081881 A2 | 07-03-2001 |

For more details about this annex : see Official Journal of the European Patent Office, No. 12/82